# EUROPÄISCHE PATENTANMELDUNG

(11) **EP 1 340 892 A2**
(43) Veröffentlichungstag der Anmeldung: **03.09.2003**
(21) Anmeldenummer: 03003304.7
(22) Anmeldetag: 13.02.2003
(51) Int. Cl.: F02B 27/02

(54) **Ventil zum Öffnen und Verschliessen eines Rohres**

(30) Priorität: 01.03.2002 DE 10209180
(71) Anmelder: FILTERWERK MANN + HUMMEL GMBH, 71638 Ludwigsburg (DE)
(72) Erfinder: Klotz, Arthur, 71686 Remseck (DE); Neuschwander, Helmut, 71636 Ludwigsburg (DE)
(74) Vertreter: Voth, Gerhard, Dipl.-Ing.

(57) **Zusammenfassung**

Ventil, insbesondere Schaltwalze, zum Öffnen und Verschließen eines Rohes, insbesondere zur Verwendung in einer Saugrohranlage für eine Mehrzylinderbrennkraftmaschine mit einem Ansaugverteiler und nebeneinander angeordneten Einzelsaugrohren, welche in einem Flansch enden, wobei in einem Einzelsaugrohr das Ventil angeordnet ist zum Verschließen oder Öffnen der Einzelsaugrohr, dadurch gekennzeichnet, dass das Ventil wenigstens ein Dichtungssystem aufweist und dieses Dichtungssystem derart radial beweglich gelagert ist, dass es in der Geschlossenstellung dichtend an der Rohrinnenwandung anliegt und in der Offenstellung und in dem Schwenkbereich von der Geschlossenstellung zur Offenstellung einen Spalt zwischen Ventil und Rohrinnenwandung bildet.

## Beschreibung

### Stand der Technik

Die Erfindung betrifft ein Ventil zum Öffnen und Verschließen eins Kanales nach dem Oberbegriff des unabhängigen Anspruchs 1.

Aus der DE 43 44 504 A1 ist ein Ventil in Form eines Drehschiebers zum Öffnen und Verschließen von einzelnen Ansaugkanälen bekannt. Die Ansaugkanäle sind Teil einer Saugrohranlage für eine Mehrzylinderbrennkraftmaschine, insbesondere mit zwei Zylinderreihen in V-Anordnung. Ein rohrförmiger Ansaugverteiler erstreckt sich über die gesamte Länge der Mehrzylinderbrennkraftmaschine. Von diesem führen einzelne Kanäle zu den Zylindern der beiden Zylinderreihen. Dieser Aufbau ist technisch sehr aufwendig. Weitere kürzer Einzelsaugrohre gehen ebenfalls von dem Ansaugverteiler aus und münden in die ersten Einzelkanäle. Die zweiten Einzelsaugrohre können durch den Drehschieber geschaltet werden, dieser Drehschieber besteht aus einer Schaltwalze die in einer Längsbohrung angeordnet ist und die Kanallänge schaltet. Diese Schaltwalze weist für jeden Einzelkanal einen Durchbruch auf der durch Drehen der Schaltwalze in oder außer Fluchtung mit dem betreffenden zweiten Einzelkanal gebracht werden kann. Zur Abdichtung zwischen den Saugkanälen bzw. zwischen benachbarten Durchbrüchen ist an der Schaltwalze jeweils eine Umfangsnut angeordnet in die ein aussenspannender Kolbenring eingesetzt ist der an der Wand der Längsbohrung bzw. an der Innenwand der Hülse dichtend anliegt. Beim Drehen der Schaltwalze entstehende Reibung, kann durch Einsatz geeigneter Materialpaarungen verringert werden. Durch die Reibung wird die Prozeßsicherheit des Schaltens erheblich beeinträchtigt.

Es ist weiterhin aus der WO 98/42966 eine Schaltwalze insbesondere zur Verwendung in einer Saugrohranlage für eine Mehrzylinderbrennkraftmaschine bekannt. Die Schaltwalze dient zum Verschließen und Öffnen der Einzelsaugrohre. Jedem Einzelsaugrohr ist ein Dichtungselement zugeordnet welches auf der Schaltwalze befestigt ist. Das jeweilige Dichtungselement besteht aus jeweils zwei Dichtleisten, welche parallel verlaufen können und an ihren Enden mit radialelastischen dichtenden Ringelementen verbunden sind, wobei die Dichtleisten federnd an der Eintritts- oder Austrittsöffnung jedes Einzelsaugrohres zu der die Schaltwalze aufnehmenden Längsbohrung anliegen. Diese Dichtelemente verbessern zwar das Dichtungsverhalten, ein reibungsfreies Drehen der Schaltwalze wird auch hier nicht erreicht.

Der Erfindung liegt die Aufgabe zugrunde, die genannten Nachteile zu vermeiden und ein Ventil zum Öffnen und Verschließen eines Rohres zu schaffen, welches einfach und kostengünstig aufgebaut ist und außerdem ein prozeßsicheres Bewegen bzw. Öffnen und Schließen ermöglicht.

Diese Aufgabe wird ausgehend von dem Oberbegriff des unabhängigen Anspruchs 1 durch dessen kennzeichnenden Merkmale gelöst.

### Vorteile der Erfindung

Der wesentliche Vorteil der Erfindung liegt darin, dass das Ventil ein Dichtungssystem aufweist. Dieses Dichtungssystem ist derart gelagert, dass beim Drehen des Ventils keine Reibungskräfte entstehen. Dies wird dadurch bewerkstelligt, dass das Dichtungssystem vor Einleitung einer Drehbewegung wegschwenkt.

In einer vorteilhaften Ausgestaltung der Erfindung ist das Dichtungssystem mit einer Nockenwelle zur Ausführung der Radialbewegung, dass heißt zum Lösen der Dichtungspartner vorgesehen. Die Nockenwelle kann durch einen Servomotor oder ein anderes Stellelement gesteuert werden. Es besteht auch die Möglichkeit, die Nockenwelle mit einer Verzahnung zu versehen und diese Verzahnung in Eingriff mit einem feststehenden Zahnkranz zu bringen.

Alternativ zu der Verzahnung besteht auch die Möglichkeit, die Nockenwelle mit einem Kipphebel auszustatten. Dieser Kipphebel wird in Eingriff gebracht mit einem Steuerelement, welches bei Einleitung der Geschlossenstellung eine Drehung der Nockenwelle bewirkt und die Dichtsysteme in Eingriff bringt.

Das Ventil wird weiterbildungsgemäß in einer Saugrohranlage für eine Mehrzylinderbrennkraftmaschine eingesetzt. Die Mehrzylinderbrennkraftmaschine weist einen Ansaugverteiler und nebeneinander angeordnete Einzelsaugrohre auf, welche in einem Flansch enden, wobei in jeweils einem Einzelsaugrohr das Ventil angeordnet ist und ein Schließen oder Öffnen bewirkt.

Das Ventil selbst besteht vorteilhafterweise aus wenigstens zwei Dichtleisten die ein Dichtungssystem bilden. Die Dichtleisten verlaufen parallel und sind an ihren Enden mit dichtenden Bogenelementen verbunden. Die Dichtleisten und Bogenelemente sind in Nuten einer Schaltwalze fixiert.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: Eine Schaltwalze in einer Saugrohranlage in Längsschnittdarstellung,
- Figur 2: die Schaltwalze in einer Detaildarstellung,
- Figur 3: das Dichtungssystem in einer perspektivischen Darstellung,
- Figur 4: zwei Varianten des Dichtungssystems,
- Figur 5a,b: die Steuerung des Dichtungssystems über einen innen liegenden Nocken,
- Figur 6a,b: die Steuerung des Dichtungssystems über einen außen liegenden Nocken,
- Figur 7a: die Anwendung einer Schaltwalze in einem Ansaugsystem mit geöffnetem Leistungskanal,
- Figur 7b: ein Detail des in Figur 7a gezeigten Ansaugsystems mit einem geschlossenen Leistungskanal.

### Beschreibung der Ausführungsbeispiele

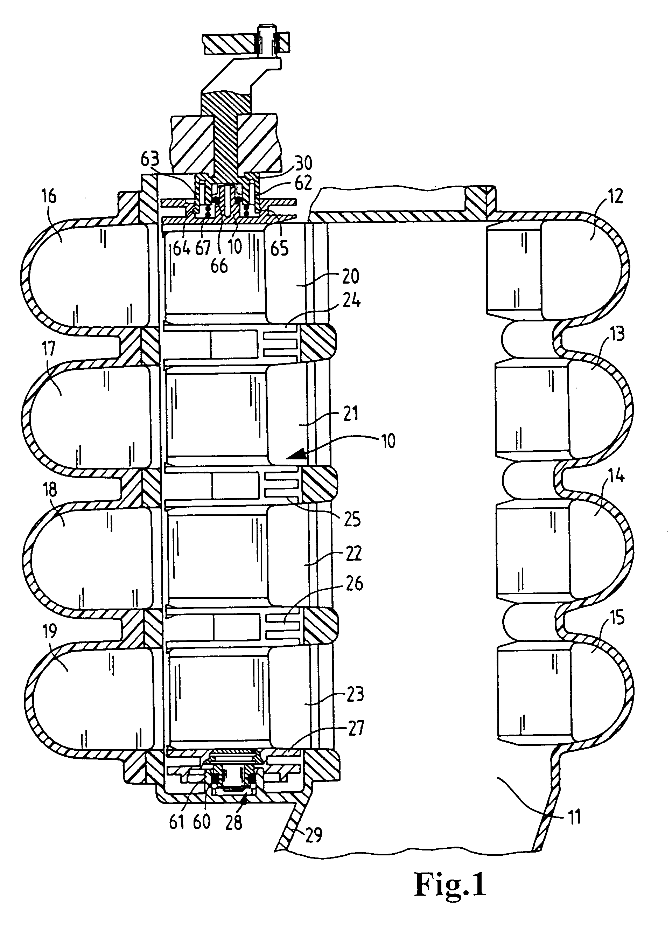

Eine Draufsichtdarstellung gemäß Figur 1 mit einer Schaltwalze in einer Saugrohranlage zeigt einen Ansaugverteiler 11 für eine Vierzylinderbrennkraftmaschine. Von dem Ansaugverteiler 11 gehen Einzelsaugrohre 12, 13, 14, 15 zu einem hier nicht dargestellten Anschlußflansch. Eine Schaltwalze 10 öffnet oder schließt sogenannte Leistungskanäle. Diese können aus kürzeren Einzelsaugrohren 16, 17, 18 19 bestehen, welche ebenfalls in den Anschlußflansch einmünden. Die Schaltwalze 10 weist Öffnungen 20, 21, 22, 23, auf. Zwischen diesen befinden sich Stützstege 24, 25, 26, 27. Die Schaltwalze ist über ein Gleitlager 28 und ein elastisches Element in dem Ansaugverteilergehäuse 29 gelagert. Auf der gegenüberliegenden Seite weist die Schaltwalze einen Hebelarm 30 auf, über welchen mit einem hier nicht dargestellten Stellglied diese in mehrere Stellungen gedreht werden kann.

Das Gleitlager 28 ist über einen O-Ring 60 elastisch in einer Aufnahme 61 des Ansaugverteilers 11 gelagert. Damit lassen sich Längentoleranzen ausgleichen. Außerdem sorgt die elastische Lagerung für eine Schwingungsdämpfung. Der Hebelarm 30 ist mit Stegen 62, 63 ausgestattet. Diese greifen in Nuten 64, 65 ein und bilden damit eine Klauenkupplung. Zusätzlich ist eine elastische Kupplung zwischen dem Hebelarm 30 und der Schaltwalze 10 über einen O-Ring 66 vorgesehen. Eine Feder 67 sorgt für einen Längentoleranzausgleich.

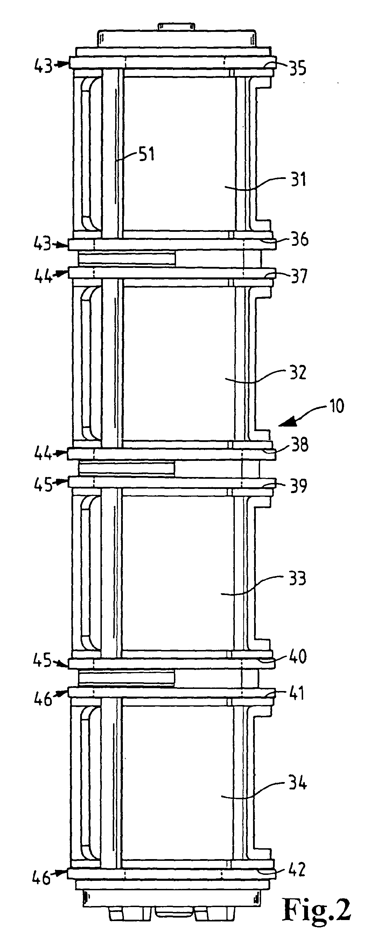

In Figur 2 ist eine Schaltwalze 10 in einer Detaildarstellung gezeigt. Diese Schaltwalze weist Öffnungen 31, 32, 33, 34 zum Durchtritt der Ansaugluft auf. Seitlich an den Öffnungen sind Nuten 35 bis 42 vorgesehen. In diesen ist ein Dichtungselement in Form eines Dichtkäfigs 43 - 46 jeweils eingesetzt.

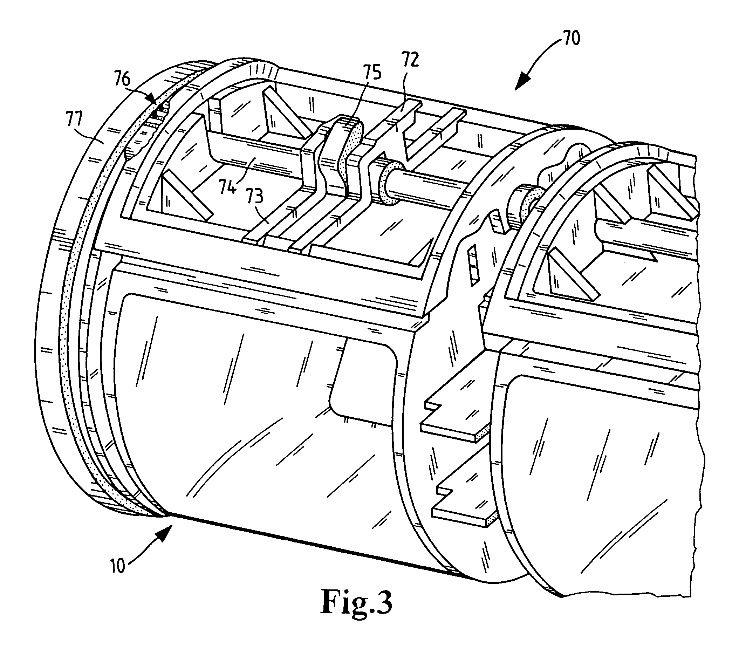

Die Detaildarstellung gemäß Figur 3 zeigt ein Dichtungssystem 70, welches rahmenförmig gestaltet ist. Das Dichtungssystem 70 weist zwei Stege 72, 73 auf die sich über eine Nockenwelle 74 erstrecken. Die Stege 72, 73 können durch Nocken 75 die an der Nockenwelle befestigt sind, gesteuert werden. Die Steuerung erfolgt derart, dass das Dichtungssystem radial nach außen bzw. nach innen bewegt wird. Die Nockenwelle 74 trägt an ihrem äußeren Ende eine Verzahnung 76, diese greift in einen Zahnkranz 77ein. Sobald ein Drehmoment auf die Schaltwalze 10 einwirkt, erfolgt eine Drehung der Nockenwelle und damit eine radiale Bewegung des Dichtungssystems. Mit den Stegen 72, 73 wird das Dichtungssystem 70 getragen. Dieses besteht aus zwei gekrümmten Stegen 71a,. 71b die über gerade Stege 71c, 71d verbunden sind und damit ein geschlossenes Dichtungsfenster bilden.

In der hier gezeigten Stellung ist das Dichtungssystem radial nach innen eingezogen und liegt im vorgesehenen Rahmen des Dichtungsystems 70 auf der Schaltwalze auf. In dieser Stellung wird eine unkontrollierte Bewegung des Dichtungssystems verhindert.

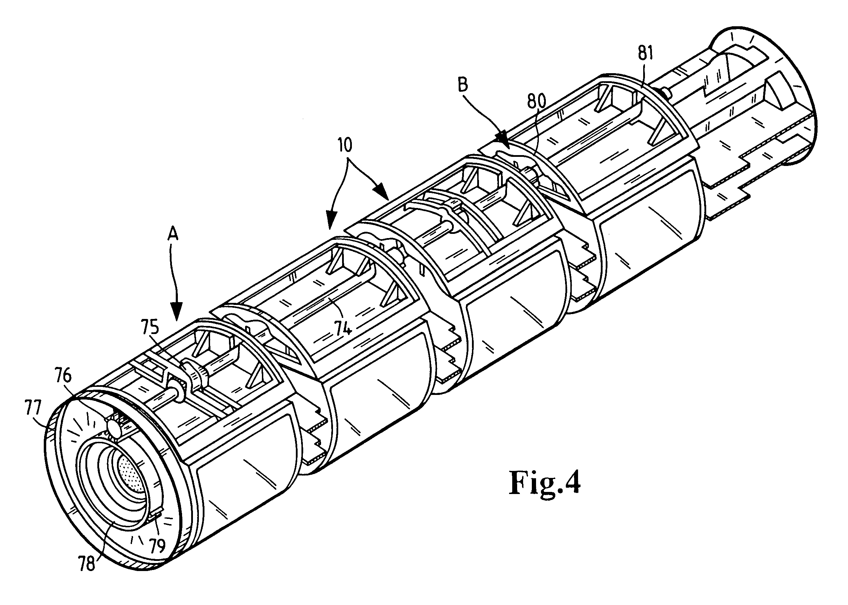

Figur 4 zeigt zwei Varianten zum Bewegen des Dichtungssystems. Variante A ist die in Figur 3 dargestellte Version. Hier ist der innere Zahnkranz 78 zu erkennen, der bei einer Drehung der Schaltwalze um 90° aus der hier gezeigten Stellung über die dort vorgesehene Verzahnung 79 eine radiale Auswärtsbewegung des Dichtungssystems bewirkt. Variante B zeigt ein Dichtungssystem welches keine Stege aufweist sondern an den Bogenelementen 80, 81 von der Nockenwelle 74 gesteuert wird. Hierzu ist die Nockenwelle an diesen Bogenelementen entsprechend gestaltet, beispielsweise sind dort Nocken oder Kipphebel angeordnet, die eine Bewegung des Dichtungssystems bewirken.

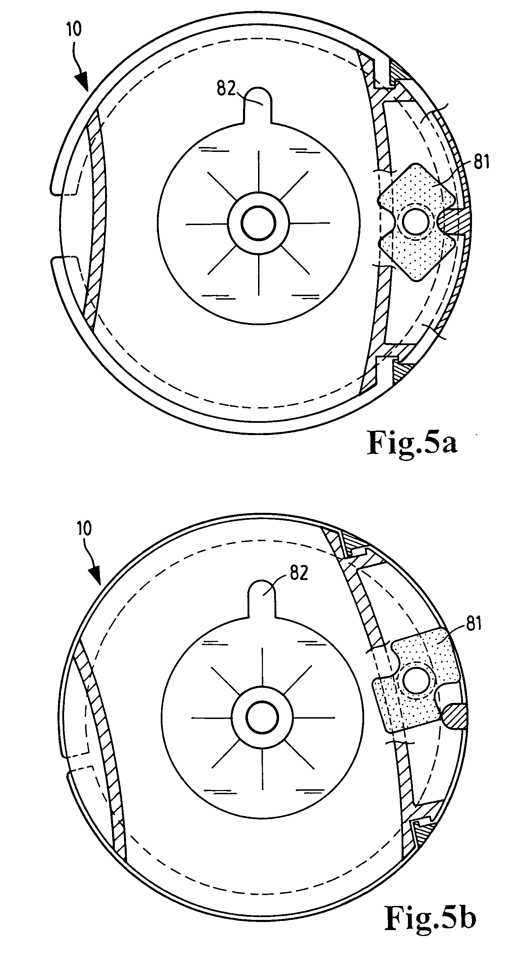

Die Figuren 5a und 5b zeigen jeweils in einer Detaildarstellung den Bewegungsablauf des Dichtungssystems bei einem Drehen der Schaltwalze 10.

Figur 5a zeigt die Position die das Dichtungssystem in der Geschlossenstellung einnimmt.

Sobald die Schaltwalze geschwenkt wird, erfolgt ein Drehen des Kipphebels 81 und damit ein Lösen des Dichtungssystems aus der ersten Position (Figur 5b).

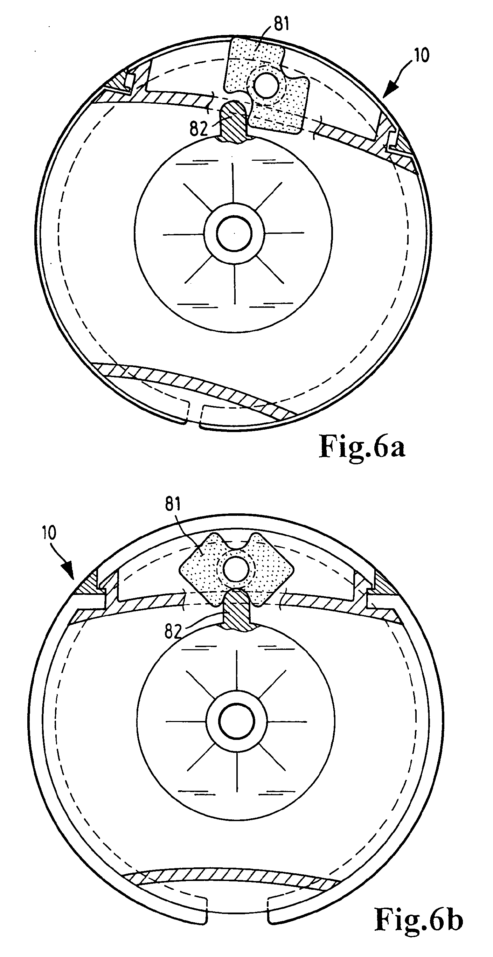

Figur 6 a,b zeigt das Einrasten des Kipphebels 81 an dem inneren Zahnkranz bzw. an dem Nocken 82. Sobald sich die Schaltwalze 10 mit dem Kipphebel 81 diesem Nocken 82 nähert, wird eine Schwenkbewegung der Nockenwelle durchgeführt, dies führt dazu, dass in der Endlage, wie in Figur 6b gezeigt, die Dichtlippe an einer Wandung anliegt und eine zuverlässige Abdichtung eines Durchtrittkanals sicherstellt.

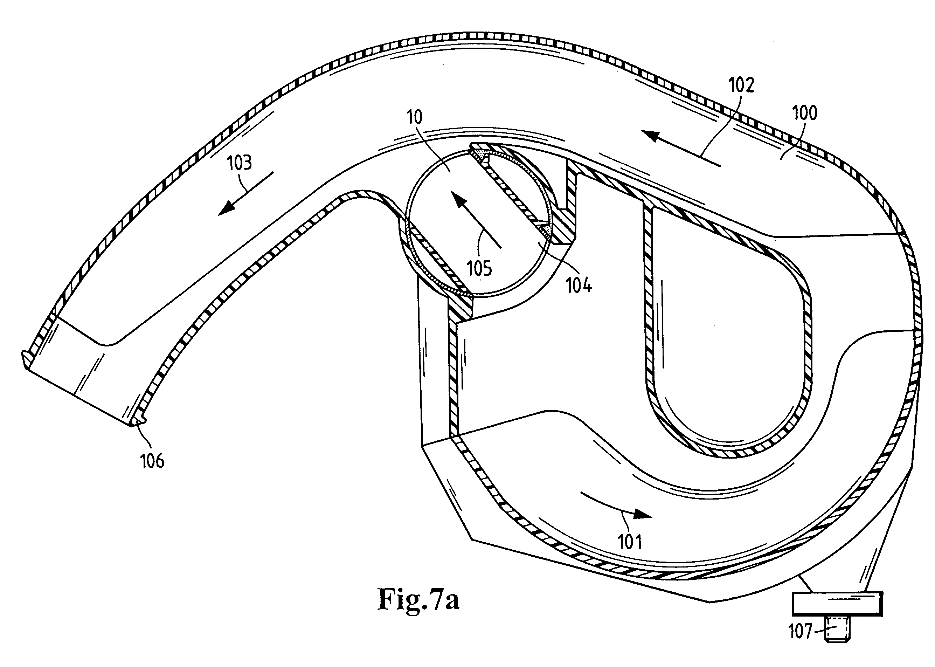

Figur 7a zeigt ein Ansaugsystem bestehend aus Kunststoffbauteilen wobei dieses einen langen Drehmomentkanal 100 für die der hier nicht dargestellten Brennkraftmaschine zugeführten Luft gemäß den Pfeilen 101, 102, 103 zugeführt wird, auserdem ist ein kurzer sogenannter Leistungskanal 104 vorgesehen, diese Luft strömt durch eine Schaltwalze 10 gemäß Pfeil 105 zu der Brennkraftmaschine. Das Ansaugsystem wird im Flanschbereich 106 an dem Zylinderkopf der Brennkraftmaschine befestigt. Mit einer Schraubbefestigung 107 erfolgt die Fixierung an einem hier nicht dargestellten Trägerbauteil. Die in Figur 7a dargestellte Stellung der Schaltwalze 10 bedeutet, dass sich die Brennkraftmaschine im höheren Drehzahlbereich befindet.

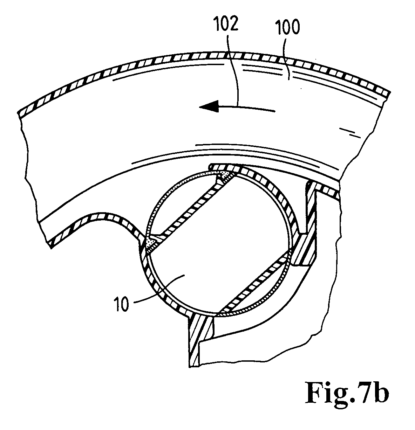

Figur 7b zeigt eine geschlossene Stellung der Schaltwalze 10, dies ist dort erforderlich wo die Brennkraftmaschine im niederen Drehzahlbereich mit einem hohen Drehmoment arbeitet. Die Umschaltung zwischen diesen beiden Stellungen erfolgt wie in den Figuren 5 und 6 dargestellt und beschrieben.

## Patentansprüche

1. Ventil, zum Öffnen und Verschließen eines Rohres, **dadurch gekennzeichnet, dass** das Ventil wenigstens ein Dichtungssystem aufweist und dieses Dichtungssystem derart radial beweglich gelagert ist, dass es in der Geschlossenstellung dichtend an der Rohrinnenwandung anliegt und in der Offenstellung und in dem Schwenkbereich von der Geschlossenstellung zur Offenstellung einen Spalt zwischen Ventil und Rohrinnenwandung bildet.

2. Ventil nach Anspruch 1, **dadurch gekennzeichnet, dass** das Dichtungssystem mit einer Nockenwelle zur Ausführung der Radialbewegung gesteuert ist.

3. Ventil nach Anspruch 1 und 2, **dadurch gekennzeichnet, dass** die Nockenwelle eine Verzahnung aufweist, und diese Verzahnung in Eingriff mit einem gegenüber dem drehbaren Ventil feststehenden Zahnkranz ist, und die Drehung der Nockenwelle bei der Einleitung der Geschlossenstellung ausführt.

4. Ventil nach Anspruch 1 und 2, **dadurch gekennzeichnet, dass** die Nockenwelle mit einem Kipphebel ausgestattet ist und dieser Kipphebel in Eingriff mit einem gegenüber dem drehbaren Ventil feststehenden Steuerelement ist, und die Drehung der Nockenwelle bei der Einleitung der Geschlossenstellung ausführt.

5. Ventil, bestehend aus einer Schaltwalze, insbesondere zur Verwendung in einer Saugrohranlage für eine Mehrzylinderbrennkraftmaschine mit einem Ansaugverteiler und nebeneinander angeordneten Einzelsaugrohren, welche in einem Flansch enden, wobei in einem Einzelsaugrohr das Ventil angeordnet ist zum Verschließen oder Öffnen der Einzelsaugrohr, **dadurch gekennzeichnet, dass** das Ventil wenigstens ein Dichtungssystem aufweist und dieses Dichtungssystem derart radial beweglich gelagert ist, dass es in der Geschlossenstellung dichtend an der Rohrinnenwandung anliegt und in der Offenstellung und in dem Schwenkbereich von der Geschlossenstellung zur Offenstellung einen Spalt zwischen Ventil und Rohrinnenwandung bildet.

6. Ventil nach einem der vorherigen Ansprüche, **dadurch gekennzeichnet, dass** das Dichtungssystem aus wenigstens zwei Dichtleisten besteht, welche parallel laufen können und an ihren Enden mit dichtenden Bogenelementen verbunden sind wobei die Dichtleisten und/oder die Bogenelemente in Nuten der Schaltwalze fixiert sind.

7. Ventil nach einem der vorherigen Ansprüche, **dadurch gekennzeichnet, dass** die Dichtleisten und/oder die Bogenelemente elastisch ausgebildet und insbesondere aus einem Elastomer gebildet sind oder mit einer umlaufenden Dichtlippe oder Abdichtung versehen sind, wobei die umlaufenden Dichtlippen oder die zusätzliche Abdichtung im Zweikomponentenspritzgießverfahren hergestellt sind.
